# EUROPÄISCHE PATENTSCHRIFT

(11) **EP 0 529 015 B1**
(45) Veröffentlichungstag und Bekanntmachung des Hinweises auf die Patenterteilung: **28.06.1995**
(21) Anmeldenummer: 92902847.0
(22) Anmeldetag: 23.01.1992
(51) Int. Cl.: B60T 8/42, B60T 8/48

(54) **SCHLUPFGEREGELTE BREMSANLAGE, INSBESONDERE FÜR KRAFTFAHRZEUGE**
BRAKING SYSTEM WITH WHEEL-SLIP CONTROL, IN PARTICULAR FOR MOTOR VEHICLES
SYSTEME DE FREINAGE A DISPOSITIF ANTI-PATINAGE, EN PARTICULIER POUR VEHICULES AUTOMOBILES

(30) Priorität: 22.03.1991 DE 4109450
(43) Veröffentlichungstag der Anmeldung: 03.03.1993
(73) Patentinhaber: ITT Automotive Europe GmbH, 60488 Frankfurt (DE)
(72) Erfinder: VOLZ, Peter, D-6100 Darmstadt (DE)
(86) Internationale Anmeldenummer: EP9200133
(87) Internationale Veröffentlichungsnummer: WO9216398

(56) Entgegenhaltungen:
- WO-A-90/12713
- DE-A- 2 643 860
- DE-A- 3 814 436
- DE-A- 3 843 570
- US-A- 4 989 924
- US-E- 25 211
- PATENT ABSTRACTS OF JAPAN vol. 14, no. 311 (M-994)(4254) 4. Juli 1990 & JP-A-02 102 858
- PATENT ABSTRACTS OF JAPAN vol. 10, no. 118 (M-475)(2175) 2. Mai 1986 & JP-A-60 248 467

## Beschreibung

Die Erfindung betrifft eine Bremsanlage mit Schlupfregelung nach dem Oberbegriff des Anspruchs 1.

Aus der internationalen Patentanmeldung WO-A-90 12 713 ist bereits die Anordnung von Druckpulsationsdämpfern innerhalb den Hauptdruckleitungen, und zwar in Nähe des Bremsdruckgebers, bzw. im Nebenschluß der elektromagnetischen Einlaß- und Auslaßventile bekannt. Die verwendeten Druckpulsationsdämpfer sind als schwingungsdämpfende elastomere Energiespeicherelemente ausgeführt, die durch ihre definierte Volumenerweiterung, Durchströmungslänge und Drosseleigenschaften eine Übertragung der aus der Pumpen- und Ventilschaltfrequenzen resultierenden Schallemission auf das massebehaftete und folglich schwingungsfähige Bremssystem verhindern sollen.

Ein relativ weiches Pedalgefühl und die Vergrößerung des Pedalweges sind die unerwünschten Folgen der durch die vorbeschriebenen Druckpulsationsdämpfer zusätzlich hervorgerufene Volumenaufnahme von Druckmittel während des Bremsvorganges.

In der DE-A-2 643 860 ist der Druckpulsationsdämpfer entweder in Reihe zwischen dem Einlaß- und dem Auslaßventil einer Radbremse in die Hauptdruckleitung geschaltet oder im Nebenschluß zur Hauptdruckleitung zwischen der Pumpendruckseite und dem Einlaß- und Auslaßventil gelegen. Der Druckpulsationsdämpfer besteht aus einer metallischen, drucksteifen Kammer mit einer nachgeschalteten Drosselstelle, so daß Druckimpulse hohe Intensität infolge der Drosselwirkung in der Hauptdruckleitung an den Begrenzungsflächen der Kammer reflektiert werden.

Die US-A-4,989,924 offenbart eine blockiergeschützte Bremsanlage mit jeweils einer Pumpe für jeden der beiden Bremskreise, so daß beide Bremskreise voneinander unabhängig während der Blockierschutzregelung mit Hilfsdruck versorgt werden. An den Druckseiten der beiden Pumpen befindet sich ein aus einem federbelasteten Schwimmkolben bestehender Druckpulsationsdämpfer, der jeweils um den Phasenunterschied einer Halbschwingung wechselweise von den Druckpulsationen der Pumpe beaufschlagt wird, womit eine Vergleichmäßigung des Pumpendruckmittelstroms in Richtung des Hauptzylinders die Pedalpulsation verringert.

Ein ähnlicher Bremsanlagenaufbau geht aus der DE-A-38 43 570 hervor, wonach zur Verringerung der Druckpulsation während der Pumpenförderung zwischen den Ausgängen zweier zeitlich versetzt fördernder Pumpen ein Kolben in einer Dämpfungseinrichtung den Druckänderungen jeder Pumpe ausgesetzt ist.

Ein ähnliches Bremsanlagensystem geht aus dem Patentabstracts of Japan, Volumen 10 Nr. 118 (M-475) (2175) hervor. Die Ausführungsvariante zur Dämpfungseinrichtung zeigt eine Doppelkolbenanordnung an der Druckseite der doppelfluidigen Radialkolbenpumpe. Die beiden Kolben sind mittels einer Druckfeder voneinander entfernt, so daß erst mit Überwindung der Federvorspannkraft die Kolben aufeinander zu bewegt werden, wodurch sich die Volumenaufnahme in der Dämpfungseinrichtung ändert.

Daher ist es die Aufgabe der Erfindung, unter Beibehaltung eines möglichst unveränderten einfachen Grundaufbaues der Bremsanlage einen Lösungsweg aufzuzeigen, der den von den Ventilschaltstellungen abhängige Geräuschpegel und dessen Fortpflanzung wirkungsvoll vermindert, ohne die vorbeschriebene, nachteilig empfundene Pedalcharakteristik während der Druckmodulation hinnehmen zu müssen.

Diese Aufgabe wird erfindungsgemäß durch die in Patentanspruch 1 angegebenen Merkmale gelöst.

Die Erfindung basiert somit auf dem Gedanken, die von den Schaltfrequenzen der Ventile ausgelösten Druckimpulse unterschiedlicher Intensität, in einem volumenverdrängenden Druckpulsationsdämpfer zu reflektieren, indem der Druckpulsationsdämpfer in der Funktion eines Resonators (Kanal und Kammer) als Abzweigfilter zur Druckmittelströmungsrichtung angeordnet ist. Die Schalldämpfung erfolgt im wesentlichen durch Impulsreflexion an den Querschnittsänderungen zwischen Kanal und Kammer sowie durch Schallspeicherung und Schallvernichtung in der Kammer. Die Pedalwegverlängerung wird hierbei durch die Beibehaltung der ursprünglichen Volumenaufnahme in der Bremsanlage mittels der das Druckmittelvolumen ausgleichenden Wirkung des Druckpulsationsdämpfers zwischen den miteinander korrespondierenden Hauptdruckleitungen verhindert.

Die Ausgestaltung des Erfindungsgedankens gemäß Anspruch 2 sieht vor, zwischen dem hydraulischen Anschluß des Druckpulsationsdämpfers und der Radbremse eine Blende in der Hauptdruckleitung anzuordnen, um zur Aktivierung des Druckpulsationsdämpfers eine druckabhängige Strombeeinflussung zu erreichen.

Das gemäß Anspruch 3 beschriebene Rückschlagventil stellt im Zusammenhang mit den gewünschten Funktionseigenschaften der Bremsanlage ein wichtiges Sicherheitsmerkmal dar. Das Rückschlagventil ermöglicht nach Beendigung des pedalseitig ausgeführten Bremsvorganges den raschen ungedrosselten Druckabbau in der jeweiligen Radbremse.

Eine besonders vorteilhafte Ausführungsform eines Reflexionsdämpfers wird in Anspruch 4 vorgestellt. Der Druckpulsationsdämpfer besteht aus einem dichtend im Zylinder geführten Kolben, der abhängig von der Intensität der Druckimpulse einerseits eine zusätzliche Volumenaufnahme (schwingungsdämpfende Elastizität der Bremsanlage), andererseits eine Reflexionskammer begrenzt.

Eine weitere vorteilhafte konstruktive Ausführungsform des Druckpulsationsdämpfers geht aus den Merkmalen des Anspruchs 5 hervor, wonach der Druckpulsationsdämpfer in einem Zylinder zwei hintereinander angeordnete Kolben aufweist. Die voneinander abgewandten Kolbenstirnflächen der beiden Kolben sind vom jeweils in den Hauptdruckleitungen herrschenden hydraulischen Druck beaufschlagbar, während die einander Zugewandten Kolbenstirnflächen der beiden Kolben einen Kompressionsraum bilden.

Alternativ zu den vorbeschriebenen Weiterbildungen des Erfindungsgegenstandes, wird in Anspruch 6 ein besonders klein und kostengünstig herzustellender Druckpulsationsdämpfer beschrieben, der lediglich aus einer in einem Gehäuse eingespannten Membran besteht, die von beiden Seiten von den Drücken zweier Radbremsen beaufschlagt ist.

Weitere Merkmale, Vorteile und Anwendungsmöglichkeiten gehen aus der nachfolgenden Beschreibung mehrere Ausführungsbeispiele hervor.

Im einzelnen zeigt:
- Figur 1:: eine erste Ausführungsform zur Anordnung von Druckpulsationsdämpfer für schlupfgeregelte Diagonal-Zweikreis-Bremsanlagen, insbesondere für Antriebsschlupfregelung bei Fahrzeugen mit Front- oder Heckantrieb,
- Figur 2:: eine weitere Ausführungsform zur Anordnung von Druckpulsationsdämpfern für schlupfgeregelte Bremsanlagen mit Hinterachs/-Vorderachs-Bremskreisaufteilung, insbesondere für Antriebsschlupfregelung bei Front- oder Heckantrieb.
- Figur 3, 4:: vorteilhafte Konstruktionen des Druckpulsationsdämpfers im Längsschnitt.

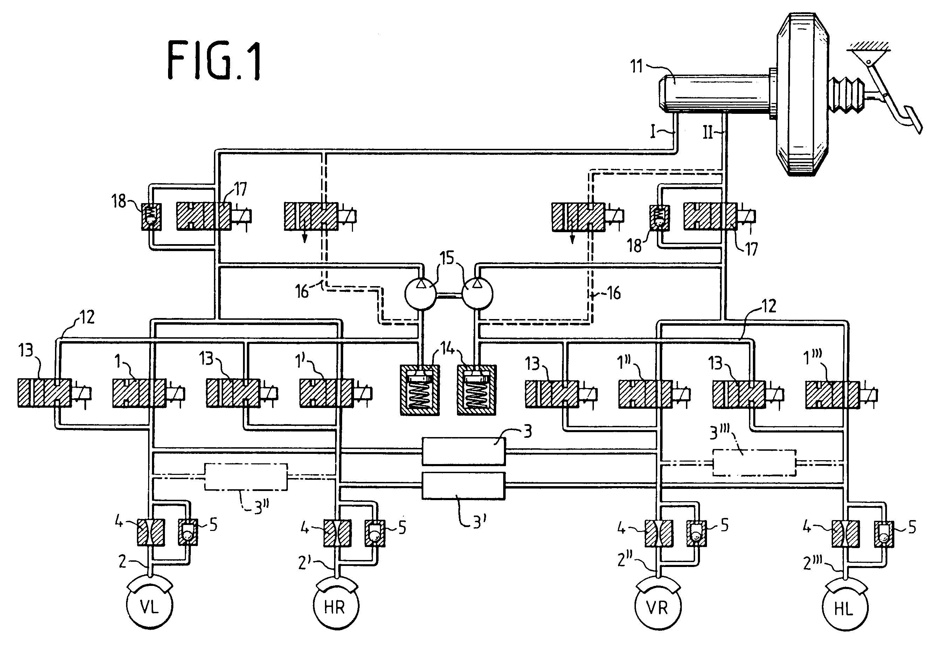

Die Figur 1 zeigt einen Hydraulikschaltplan für eine schlupfgeregelte Diagonal-Zweikreis-Bremsanlage. Die Hydraulikschaltung besteht im einzelnen aus den am Bremsdruckgeber 11 angeschlossenen beiden Bremskreisen I, II, die sich über die zugeordneten Hauptdruckleitungen 2, 2', 2'', 2''', in Richtung der einzelnen Radbremsen VL, HR, HL, VR diagonal verzweigen. In jeder Hauptdruckleitung 2 bis 2''' eingesetzt, befinden sich in der Grundstellung strömungsoffene Einlaßventile 1, 1', 1'', 1''', die sowohl elektromagnetisch, elektromotorisch oder hydraulisch angesteuert werden können. Jeweils zwischen den Einlaßventilen 1 bis 1''' und den Radbremsen VL, HR, HL, VR ist eine Rücklaufleitung 12 angeschlossen, die ein in der Grundstellung vorzugsweise elektromagnetisch gesperrtes Auslaßventil 13 aufnimmt. Jede Rücklaufleitung weist eine hydraulische Verbindung zu einem Niederdruckspeicher 14 auf, der überschüssiges Druckmittel jeweils zur Saugseite einer Hilfsdruckpumpe 15 zuführt. Jeder Bremskreis besitzt zumindest eine aus Niederdruckspeicher 14 und Hilfsdruckpumpe 15 bestehende dynamische Energieversorgung, die während der Schlupfregelung aktiviert und der fußkraftproportionalen Druckmitteleinspeisung überlagert wird. Um das Ansaugen der Hilfsdruckpumpen 15 zu verbessern, stellt ein zwischen Niederdruckspeicher 14 und Hilfsdruckpumpe 15 schaltbarer Abzweig 16 eine direkte hydraulische Verbindung zum Bremsdruckgeber 11 her. Ferner sind für die Antriebsschlupfregelung in den beiden Bremskreisen ASR-Trennventile 17 und Überdruckventile 18 angeordnet. Die für die Geräuschreduzierung maßgeblichen Bauteile befinden sich jeweils stromabwärts zwischen dem Anschluß der Einlaß- bzw. Auslaßventile und den Radbremsen. In einer ersten bevorzugten Anordnung befindet sich der Druckpulsationsdämpfer 3 im Nebenschluß zu den an die Radbremsen VR, VL der Vorderachse führenden Hauptdruckleitung 2, 2''. Analog hierzu zeigt Figur 1 einen weiteren Druckpulsationsdämpfer 3' im Abzweig der beiden zu den Radbremsen HL, HR der Hinterachse führenden Hauptdruckleitung 2', 2'''. Eine weitere vorteilhafte Anordnungsvariante von Druckpulsationsdämpfern gemäß Figur 1 sieht vor, jeweils einen Druckpulsationsdämpfer 3'', bzw. 3''' zwischen den beiden diagonalen Radbremsen VL, HR bzw. VR, HL und damit im Abzweig der zugehörigen diagonalen Hauptdruckleitung 2, 2' bzw. 2'', 2''' anzuordnen. Welche der vorgeschlagenen Anordnungsvarianten und Kombinationen für die beschriebenen diagonal aufgeteilte Zweikreisbremsanlage zum Tragen kommt, richtet sich insbesondere bei einer Antriebsschlupfregelung nach dem angestrebten Maß der Geräuschdämpfung und der Lage der angetriebenen Achse (Front- oder Heckantrieb).

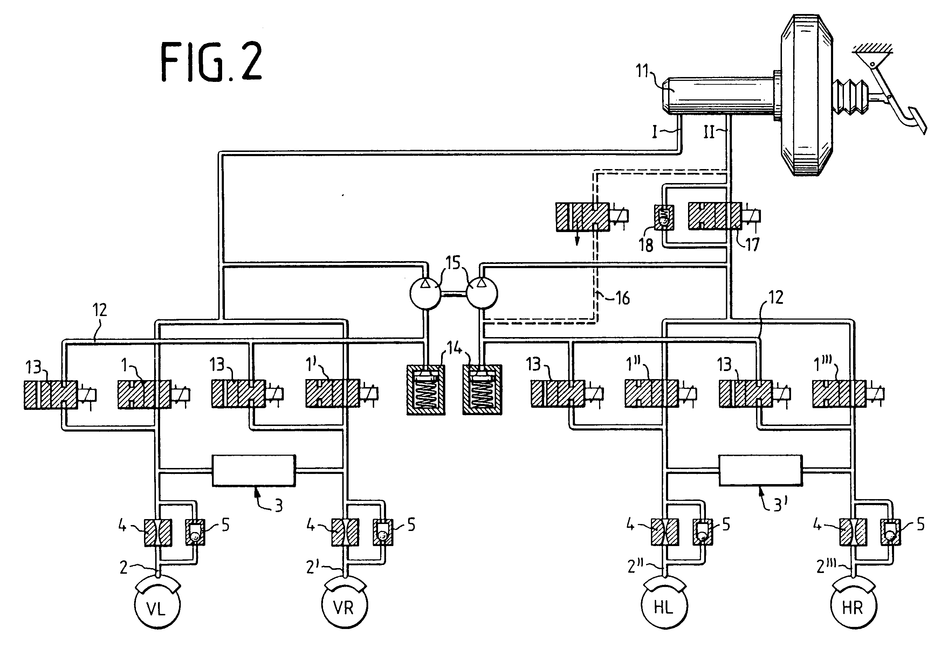

Die Figur 2 zeigt abweichend von Figur 1 eine Zweikreisbremsanlage mit Hinterachs- und Vorderachsbremskreisaufteilung, so daß abweichend vom Hydraulikschaltplan gemäß Figur 1, am ersten Bremskreis I die Radbremsen VL, VR der Vorderachse, am zweiten Bremskreis II die Radbremsen HL, HR der Hinterachse mit ihren zugehörigen Hauptdruckleitungen 2 bis 2''' angeschlossen sind. Ferner gelten die bereits aus Figur 1 bekannten Erläuterungen. Es wird darauf verwiesen, daß gleiche Bauteile von Figur 1 und Figur 2 mit gleichen Bezugszeichen versehen sind. Ein erster Druckpulsationsdämpfer 3 befindet sich zwischen den zu den Radbremsen vorne links, vorne rechts der Vorderachse führenden beiden Hauptdruckleitungen 2, 2', während ein zweiter Druckpulsationsdämpfer 3' zwischen den zu den Radbremsen hinten links, hinten rechts der Hinterachse führenden beiden Hauptdruckleitungen 2'', 2''' angeordnet ist. Soweit nicht im Detail auf Figur 2 eingegangen wird, sind dieser die Angaben von Figur 1 zugrunde zu legen. Funktionsweise:

Für das Funktionsprinzip und damit für die Wirkungsweise der Druckpulsationsdämpfer in der Bremsanlage, insbesondere während der Antriebsschlupfregelung, ist die Wahl der Bremskreisaufteilung ohne Belang. Die Funktion der Druckpulsationsdämpfer soll daher grundlegend und dennoch beispielhaft an dem zwischen den beiden Radbremsen VR, VL einer vom Motor angetriebenen Vorderachse befindlichen Druckpulsationsdämpfer 3 (Diagonalbremsanlage gemäß Figur 1) erläutert werden.

Sobald im Rahmen der Schlupfregelung zumindest eines der beiden Ventilpaare, d.h. das Einlaß- und/oder Auslaßventil 1, 13, bzw. 1'', 13 des betreffenden Fahrzeugrades aktiviert wird, gelangen instationäre Druckwellen unterschiedlicher Intensität während ihrer räumlichen und zeitlichen Dichteänderung als longitutinale Schallwellen in den Bereich des als Abzweigfilters wirksamen Druckpulsationsdämpfers 3. Hierbei führt der Transport von mechanischen Erhaltungsgrößen (Energie und Impuls) einerseits durch die Beschaffenheit der Grenzflächen innerhalb des Druckpulsationsdämpfers 3 zur Reflexion, andererseits führt die durch die vom Druckimpuls verursachte Druckmittelvolumen verdrängende Eigenschaft des Druckpulsationsdämpfers 3 zu einer Schwächung des Schalldruckpegels, ohne eine zusätzliche Volumenaufnahme des Bremssystems und damit eine Pedalwegverlängerung herbeizuführen. Die Beibehaltung der ursprünglichen Volumenaufnahme im Bremssystem basiert darauf, daß das mit dem Effekt einer Volumenvergrößerung aus einer modulierten Radbremse in die zugehörige Hauptdruckleitung und damit in den Abzweig zum Druckpulsationsdämpfer verdrängte Druckmittel, zwangsläufig zu einer mittelbaren Rückwirkung der modulierten Flüssigkeitssäule im Sinne einer Verkleinerung der Volumenaufnahme in einer weiteren mit dem Druckpulsationsdämpfer korrespondierende Hauptdruckleitung führt, so daß unabhängig von der Größe der Druckpulsation immer ein Ausgleich von Druckmittelvolumen im Bremssystem angestrebt wird.

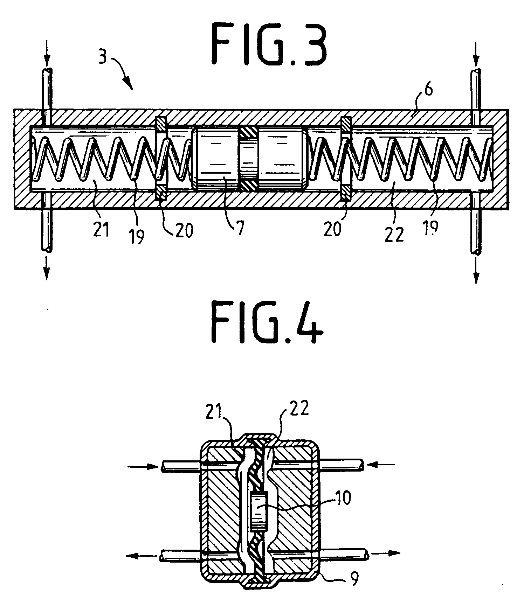

Konkrete Ausführungsformen zur Konstruktion des Druckpulsationsdämpfers sind den Figuren 3 bis 4 zu entnehmen.

Die Figur 3 zeigt einen aus einer Zylinder-Kolben-Einheit gebildeten Druckpulsationsdämpfer 3. Der Kolben 7 ist beidseitig hydraulisch beaufschlagbar zwischen zwei Druckfedern 19 eingespannt. Zur Abdichtung der Mantelfläche gegenüber Leckageströme und damit zur Vermeidung eines Druckausgleichs zwischen einer ersten und einer weiteren Hauptdruckleitung (beispielsweise 2, 2' bzw. 2'', 2''') ist der Kolben 7 mit einer Ringnut versehen. Zusätzlich begrenzen beidseitig des Kolbens 7 in den Zylinder eingelassene Anschläge 20 den Maximalhub. Die durch den Zylinder 6 und Kolben 7 eingegrenzten beiden Druckräume 21, 22 werden jeweils von der zu einer Radbremse zugehörigen Hauptdruckleitung durchdrungen, so daß sich Druckwellen unterschiedlicher Intensität im Druckraum ausbreiten, reflektieren und durch die Verschiebung des Kolbens 7 entspannen können, womit gleichzeitig eine im ersten Druckraum 21 eingeleitete Volumenvergrößerung im weiteren Druckraum 22 zu einer Volumenverkleinerung führt, um das Druckmittelvolumen der Bremsanlage konstant zu halten.

Ein besonders klein und kostengünstiger Aufbau des Druckpulsationsdämpfers erhält man gemäß Figur 4. Der Druckpulsationsdämpfer besteht aus einem Gehäuse 9. Das Gehäuse 9 wird mittels einer Membran 10 in zwei Druckräume 21, 22 unterteilt, die von jeweils einer Hauptdruckleitung 2, 2', bzw. 2'', 2''' durchdrungen sind.

### Bezugszeichenliste

- 1, 1', 1'', 1''': Einlaßventil
- 2, 2', 2'', 2''': Hauptdruckleitung
- 3, 3', 3'', 3''': Druckpulsationsdämpfer
- 4: Blende
- 5: Rückschlagventil
- 6: Zylinder
- 7, 7': Kolben
- 8: Kompressionsraum
- 9: Gehäuse
- 10: Membran
- 11: Bremsdruckgeber
- 12: Rücklaufleitung
- 13: Auslaßventil
- 14: Niederdruckspeicher
- 15: Hilfsdruckpumpe
- 16: Abzweig
- 17: ASR-Trennventil
- 18: Druckbegrenzer
- 19: Druckfeder
- 20: Anschlag
- 21: Druckraum
- 22: Druckraum
- 23: Druckfeder

## Patentansprüche

1. Schlupfgeregelte Bremsanlage, insbesondere für Kraftfahrzeuge, mit einem pedalbetätigten, vorzugsweise hilfskraftunterstützten Bremsdruckgeber (11), der einen Hauptzylinder aufnimmt, an dem über Hauptdruckleitungen (2 - 2''') die Radbremsen (VR, VL, HR, HL) angeschlossen sind, aus hydraulischen Hilfsdruckpumpen (15) sowie aus Radsensoren und elektronischen Schaltkreisen zur Ermittlung des Raddrehverhaltens und zur Erzeugung von elektrischen Bremsdrucksteuersignalen bestehend, mit denen zur Schlupfregelung in die Druckmittelleitungen eingefügte, vorzugsweise elektromagnetisch betätigbare Druckmitteleinlaß- und Auslaßventile (1 - 1''' bzw. 13) steuerbar sind, dadurch **gekennzeichnet**, daß jeweils zwischen den Radbremsen (VL, VR, HL, HR) und den zugehörigen Einlaßventilen (1, 1', 1'', 1''') zweier Hauptdruckleitungen (2, 2', 2'', 2''') zumindest ein mit der Drucksäule der beiden Hauptdruckleitungen (2, 2', 2'', 2''') in Wechselwirkung stehender volumenverdrängender Druckpulsationsdämpfer (3, 3', 3'', 3''') angeordnet ist, der abhängig von den Schaltfrequenzen der Druckmitteleinlaß- und Auslaßventile (1 - 1''' bzw. 13) die im Druckmittel erzeugte Schallenergie in kinetische Energie konvertiert und/oder an Begrenzungsflächen des Druckpulsationsdämpfers (3, 3', 3'', 3''') reflektiert, und daß der Druckpulsationsdämpfer (3, 3', 3'', 3''') derart ausgebildet ist, daß es eine Volumenvergrößerung durch das aus einer Radbremse (VL, VR, HL, HR) in die zugehörige eine Hauptdruckleitung (2, 2', 2'', 2''') und zum Druckpulsationsdämpfer (3, 3', 3'', 3''') verdrängte Druckmittel durch eine Volumenverkleinerung in der anderen, mit dem Druckpulsationsdämpfer (3, 3', 3'', 3''') Verbundenen Hauptdruckleitung (2, 2', 2'', 2''') Kompensiert.

2. Schlupfgeregelte Bremsanlage nach Anspruch 1, dadurch **gekennzeichnet**, daß jeweils im Bereich zwischen der einer Hauptdruckleitung (2 - 2''') zugeordneten Radbremse (VL, VR, HL, HR) und einer Anschlußstelle des Druckpulsationsdämpfers (3 bis 3''') ein Blenden- oder Drosselkörper (4) eingesetzt ist.

3. Schlupfgeregelte Bremsanlage nach Anspruch 2, dadurch **gekennzeichnet**, daß parallel zum Blenden- bzw. Drosselkörper (4) ein in Richtung der Radbremse (VL, VR, HL, HR) sperrendes Rückschlagventil (5) angeordnet ist.

4. Schlupfgeregelte Bremsanlage nach mindestens einem der vorhergehenden Ansprüche, dadurch **gekennzeichnet**, daß der das Druckmittelvolumen kompensierende Druckpulsationsdämpfer (3 bis 3''') zumindest aus einer Kolben-Zylinder-Einheit gebildet ist, dessen dichtend im Zylinder (6) geführter, als Medientrenner wirkender Kolben (7, 7') von den Radbremsdrücken zweier Hauptdruckleitungen (2 bis 2''') beaufschlagbar ist.

5. Schlupfgeregelte Bremsanlage nach mindestens einem der vorhergehenden Ansprüche 1 bis 3, dadurch **gekennzeichnet**, daß der Druckpulsationsdämpfer (3 bis 3') zwei in einem Zylinder (6) hintereinander angeordnete Kolben (7, 7') aufweist, wobei die voneinander abgewandten Kolbenstirnflächen der beiden Kolben (7, 7') vom jeweiligen in den Hauptdruckleitungen (2 bis 2''') herrschenden hydraulischen Druck beaufschlagbar sind, während die einander zugewandten Kolbenstirnflächen in der beiden Kolben (7, 7') einen Kompressionsraum (8) begrenzen.

6. Schlupfgeregelte Bremsanlage nach einem der vorhergehenden Ansprüche 1 bis 3, dadurch **gekennzeichnet**, daß der Druckpulsationsdämpfer (3 bis 3''') eine in einem Gehäuse (9) eingespannte Membran (10) aufweist, die von beiden Seiten von den jeweils in den Hauptdruckleitungen (2 bis 2''') zweier Radbremsen herrschenden Druck beaufschlagbar ist.

## Claims

1. A slip-controlled brake system, in particular for use with automotive vehicles, including a pedal-actuated, preferably auxiliary-force-supported brake pressure generator (11) accommodating a master cylinder connected to which, through main pressure conduits (2 - 2'''), are the wheel brakes (VR, VL, HR, HL), hydraulic auxiliary pressure pumps (15) and wheel sensors and electronic circuits to detect the wheel rotating pattern and to generate electrical brake pressure control signals capable of controlling preferably electromagnetically actuatable pressure fluid inlet and outlet valves (1 - 1''' or 13) provided in the pressure fluid conduits for slip control purposes,
**characterized** in that disposed respectively between the wheel brakes (VL, VR, HL, HR) and the associated inlet valves (1, 1', 1'', 1''') of two main pressure conduits (2, 2' , 2'', 2''') is at least one volume displacing pressure pulsation snubber (3, 3', 3'', 3''') interacting with the pressure column of the two main pressure conduits (2, 2', 2'', 2''') and, in response to the switch frequencies of the pressure fluid inlet and outlet valves (1 - 1''' or 13), converting the sonic energy generated in the pressure fluid to kinetic energy and/or reflecting it to boundary faces of the pressure pulsation snubber (3, 3', 3'', 3'''), and in that the pressure pulsation snubber (3, 3', 3'', 3''') is configured such that it compensates an increase in volume due to the pressure fluid displaced from a wheel brake (VL, VR, HL, HR) to the one associated main pressure conduit (2, 2', 2'', 2''') and to the pressure pulsation snubber (3, 3', 3'', 3''') by a decrease in volume in the other main pressure conduit (2, 2', 2'', 2''') connected to the pressure pulsation snubber (3, 3', 3'', 3''').

2. A slip-controlled brake system as claimed in claim 1, **characterized** in that provided respectively in the area between the wheel brake (VL, VR, HL, HR) associated with a main pressure conduit (2 - 2''') and the point of connection of the pressure pulsation snubber (3 to 3''') is a restrictor or throttling member (4).

3. A slip-controlled brake system as claimed in claim 2, **characterized** in that disposed in parallel to the restrictor or throttling member (4) is a check valve (5) blocking toward the wheel brake (VL, VR, HL, HR).

4. A slip-controlled brake system as claimed in at least one of the preceding claims, **characterized** in that the pressure pulsation snubber (3 to 3''') for compensating the pressure fluid volume is formed of at least one piston-and-cylinder unit, and the wheel brake pressures of two main pressure conduits (2 to 2''') can be applied to the piston (7, 7') of the piston-and-cylinder unit which is sealingly guided within the cylinder (6) and acts as a fluid separator.

5. A slip-controlled brake system as claimed in at least one of the preceding caims 1 to 3, **characterized** in that the pressure pulsation snubber (3 to 3') includes two pistons (7, 7') arranged in series within a cylinder (6), with the hydraulic pressure respectively prevailing within the main pressure conduits (2 to 2''') being applied to the piston front faces of the two pistons (7, 7') which face away from one another, while the piston faces of the two pistons (7, 7') facing one another confine a compression chamber (8).

6. A slip-controlled brake system as claimed in any one of the preceding claims 1 to 3, **characterized** in that the pressure pulsation snubber (3 to 3''') comprises a diaphragm (10) clamped within a housing (9), to which the pressure prevailing respectively within the main pressure conduits (2 to 2''') of two wheel brakes can be applied from either side.

## Revendications

1. Système de freinage à régulation du glissement, notamment pour véhicules automobiles, comprenant un générateur de pression de freinage (11) qui est actionné au moyen d'une pédale, dispose de préférence d'une amplification au moyen d'une force auxiliaire et comprend un maître-cylindre auquel les freins de roue (VR, VL, HR, HL) sont raccordés par l'intermédiaire de conduites de pression principale (2 - 2'''), ce système étant constitué de pompes hydrauliques de pression auxiliaire (15), ainsi que de capteurs de roue et de circuits électroniques servant à relever le comportement des roues en rotation et à produire des signaux électriques de commande de pression de freinage au moyen desquels peuvent être commandées, en vue de la régulation de glissement, des valves d'entrée d'agent de pression (1 - 1''') et valves de sortie d'agent de pression (13) interposées dans les conduites d'agent de pression et de préférence agencées de façon à pouvoir être commandées par voie électromagnétique, caractérisé en ce qu'entre les freins de roue (VL, VR, HL, HR) et les valves d'entrée associées (1, 1', 1'', 1''') de deux conduites de pression principale (2, 2', 2'', 2'''), il est dans chaque cas disposé un amortisseur de pulsations de pression (3, 3', 3'', 3''') qui refoule un volume et est en interaction avec la perte de charge entre les deux conduites de pression principale (2, 2', 2'', 2''') et qui, en fonction des fréquences de commutation des valves d'entrée d'agent de pression (1 - 1''') et valves de sortie d'agent de pression (13), convertit l'énergie sonore produite dans l'agent de pression en énergie cinétique et/ou la réfléchit sur des surfaces-limites de l'amortisseur de pulsations de pression (3, 3', 3'', 3''') et en ce que l'amortisseur de pulsations de pression (3, 3', 3'', 3''') est agencé d'une façon telle qu'au moyen de l'agent de pression refoulé d'un frein de roue (VL, VR, HL, HR) dans une conduite de pression principale (2, 2', 2'', 2''') associée et vers l'amortisseur de pulsations de pression (3, 3', 3'', 3'''), il compense une augmentation de volume par une diminution de volume dans la seconde conduite de pression principale (2, 2', 2'', 2''') reliée à l'amortisseur de pulsations de pression (3, 3', 3'', 3''').

2. Système de freinage à régulation du glissement selon la revendication 1, caractérisé en ce que, dans la zone située entre le frein de roue (VL, VR, HL, HR) associé à l'une des conduites de pression principale (2 - 2''') et un emplacement de raccordement de l'amortisseur de pulsations de pression (3 à 3'''), il est dans chaque cas disposé un corps d'étranglement ou de laminage (4).

3. Système de freinage à régulation du glissement selon la revendication 2, caractérisé en ce qu'une valve antiretour (5) bloquant en direction du frein de roue (VL, VR, HL, HR) est montée en parallèle au corps d'étranglement ou de laminage (4).

4. Système de freinage à régulation du glissement selon au moins l'une des revendications précédentes, caractérisé en ce que l'amortisseur de pulsations de pression (3 à 3''') compensant le volume d'agent de pression est formé d'au moins une unité cylindre-piston dont le piston (7, 7'), guidé d'une manière étanche dans le cylindre (6) et jouant le rôle de séparateur de fluides, est agencé de façon à être soumis à l'action des pressions de frein de roue de deux conduites de pression principale (2 à 2''').

5. Système de freinage à régulation du glissement selon au moins l'une des revendications précédentes 1 à 3, caractérisé en ce que l'amortisseur de pulsations de pression (3 à 3') comprend deux pistons (7, 7') disposés l'un derrière l'autre dans un cylindre (6), les surfaces frontales des deux pistons (7, 7') qui sont situées à l'opposé l'une de l'autre pouvant être soumises à l'action de la pression hydraulique régnant dans chaque cas dans les conduites de pression principale (2 à 2'''), tandis que les surfaces frontales de piston qui, dans les deux pistons (7, 7'), se font face délimitent une chambre de compression (8).

6. Système de freinage à régulation du glissement selon l'une des revendications précédentes 1 à 3, caractérisé en ce que l'amortisseur de pulsations de pression (3 à 3''') comprend une membrane (10) qui est tendue dans un boîtier (9) et qui peut être soumise des deux côtés à l'action respectivement des pressions régnant dans les conduites de pression principale (2 à 2''') de deux freins de roue.
